# EUROPEAN PATENT APPLICATION

(11) **EP 4 387 288 A1**
(43) Date of publication of application: **19.06.2024**
(21) Application number: 22869150.7
(22) Date of filing: 09.09.2022
(51) Int. Cl.: H04W 4/50

(54) **COMMUNICATION METHOD AND COMMUNICATION APPARATUS**

(30) Priority: 15.09.2021 CN 202111080886
(71) Applicant: Huawei Technologies Co., Ltd., Shenzhen, Guangdong 518129 (CN)
(72) Inventor: QI, Caixia, Shenzhen, Guangdong 518129 (CN); ZHOU, Han, Shenzhen, Guangdong 518129 (CN)
(74) Representative: Maiwald GmbH
(86) International application number: PCT/CN2022/118231
(87) International publication number: WO 2023/040781

(57) **Abstract**

This application provides a communication method and a communication apparatus. The method includes: A service communication proxy receives a service request message sent by a service invoking network element. The service request message is used to request to invoke a first service, the service request message indicates version information of a first service-based interface supported by the service invoking network element, and the first service-based interface is an interface corresponding to the first service. The service communication proxy selects a first service providing network element based on the service request message. The first service providing network element and the service invoking network element support a same version of the first service-based interface. The service request message indicates the version information of the first service-based interface supported by the service invoking network element, so that the service communication proxy may determine an appropriate service providing network element, to avoid a communication failure caused by inconsistency between interface versions supported by network elements, and further improve service experience of a user.

## Description

This application claims priority to Chinese Patent Application No. 202111080886.1, filed with the China National Intellectual Property Administration on September 15, 2021 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a 5th generation (5th generation, 5G) communication network, a core network uses a service-based architecture (service-based architecture, SBA), and network elements communicate with each other by using a service-based interface (service-based interface, SBI). One service-based interface may have a plurality of versions at the same time, for example, V1, V2, and V3 versions. One service providing network element that provides a specific service may support a plurality of versions of one service-based interface. Alternatively, a plurality of service providing network elements that provide a same service may separately support one or more different versions of one service-based interface. A service invoking network element communicates with the service providing network element by invoking a service-based interface of the service providing network element, and the service invoking network element may support one or more versions of the service-based interface. Usually, the service providing network element may register all versions supported by the service providing network element with a network repository function (network repository function, NRF). When the service invoking network element needs to communicate with the service providing network element, the service invoking network element may obtain, from the NRF, version information supported by the service providing network element, and select an appropriate service providing network element with reference to version information supported by the service invoking network element. For example, a same version supported by both the service invoking network element and the service providing network element is selected for communication.

A service communication proxy (service communication proxy, SCP) is introduced in the 5G network. The service communication proxy is deployed at a front end of the service providing network element, that is, between the service providing network element and the service invoking network element, and may be configured to select the service providing network element. When both the service invoking network element and the service providing network element support the one or more versions of the service-based interface at the same time, how the SCP selects a service providing network element that matches a version to communicate with the service invoking network element becomes an urgent problem to be resolved.

### SUMMARY

This application provides a communication method and a communication apparatus, so that an appropriate service providing network element can be selected to communicate with a service invoking network element, to improve service experience of a user.

According to a first aspect, a communication method is provided. The method includes: A service communication proxy receives a service request message sent by a service invoking network element. The service request message is used to request to invoke a first service, the service request message indicates version information of a first service-based interface supported by the service invoking network element, and the first service-based interface is an interface corresponding to the first service. The service communication proxy selects a first service providing network element based on the service request message. The first service providing network element and the service invoking network element support a same version of the first service-based interface.

According to the method provided in this embodiment of this application, the service communication proxy receives the service request message sent by the service invoking network element. The service request message indicates a version list of the first service-based interface supported by the service invoking network element, and the service communication proxy may select an appropriate service providing network element based on the service request message, to avoid a communication failure caused by inconsistency between interface versions supported by the service invoking network element and the service providing network element, and further improve service experience of a user.

With reference to the first aspect, in some implementations of the first aspect, the service communication proxy obtains registration information of a service providing network element from a network repository function network element. The service providing network element is configured to provide the first service, the registration information includes a version list of the first service-based interface supported by one or more service providing network elements, and the version list includes one or more versions.

With reference to the first aspect, in some implementations of the first aspect, the service request message includes a version of the first service-based interface that is preferentially selected by the service invoking network element. The service communication proxy determines, based on the registration information, that a service providing network element that is in the one or more service providing network elements and that supports the version of the first service-based interface that is preferentially selected by the service invoking network element is the first service providing network element.

With reference to the first aspect, in some implementations of the first aspect, the service request message further includes the version list of the first service-based interface supported by the service invoking network element, and the version list includes one or more versions. The service communication proxy determines that the service providing network element that supports the version of the first service-based interface that is preferentially selected by the service invoking network element does not exist in the one or more service providing network elements. The service communication proxy determines the first service providing network element according to a local configuration rule. The first service providing network element supports at least one version in the version list.

With reference to the first aspect, in some implementations of the first aspect, the service request message includes the version list of the first service-based interface supported by the service invoking network element, and the version list includes one or more versions. If the version list of the first service-based interface supported by the service invoking network element includes one version, the service communication proxy determines that a service providing network element that is in the one or more service providing network elements and that supports the one version is the first service providing network element. Alternatively, if the version list of the first service-based interface supported by the service invoking network element includes a plurality of versions, the service communication proxy determines the first service providing network element according to a local configuration rule. The first service providing network element supports at least one of the plurality of versions.

With reference to the first aspect, in some implementations of the first aspect, the version list is carried in a user-defined hypertext transfer protocol HTTP header of the service request message, and the version preferentially selected by the service invoking network element is carried in a uniform resource identifier URI of the service request message.

With reference to the first aspect, in some implementations of the first aspect, if the URI of the service request message includes a first version, and the first version indicates a version of the first service-based interface supported by the service invoking network element, the service communication proxy determines that a service providing network element that is in the one or more service providing network elements and that supports the first version is the first service providing network element. Alternatively, if the URI of the service request message does not include version information, and indicates that the service invoking network element supports all versions of the first service-based interface, the service communication proxy determines the first service providing network element according to a local configuration rule.

With reference to the first aspect, in some implementations of the first aspect, the local configuration rule includes at least one of the following rules: preferentially selecting a network element that supports a higher version or a lower version, preferentially selecting a network element with a higher priority, and preferentially selecting a lower-load network element.

With reference to the first aspect, in some implementations of the first aspect, the service communication proxy determines that a version of the first service-based interface included in the URI of the service request message is inconsistent with a version of the first service-based interface selected by the service communication proxy. The service communication proxy changes the version of the first service-based interface included in the URI of the service request message to the version of the first service-based interface selected by the service communication proxy.

With reference to the first aspect, in some implementations of the first aspect, the service communication proxy receives a service response message sent by the first service providing network element. The service communication proxy sends the service response message to the service invoking network element. The service response message includes the version of the first service-based interface selected by the service communication proxy.

According to a second aspect, a communication method is provided. The method includes: A service invoking network element sends a service request message to a service communication proxy. The service request message is used to request to invoke a first service, the service request message indicates version information of a first service-based interface supported by the service invoking network element, and the first service-based interface is an interface corresponding to the first service.

With reference to the second aspect, in some implementations of the second aspect, the service request message includes a version of the first service-based interface that is preferentially selected by the service invoking network element, and the version of the first service-based interface that is preferentially selected by the service invoking network element is used by the service communication proxy to select a first service providing network element.

With reference to the second aspect, in some implementations of the second aspect, the service request message further includes a version list of the first service-based interface supported by the service invoking network element, the version list includes one or more versions, the version list is used by the service communication proxy to select the first service providing network element, and the first service providing network element supports at least one version in the version list.

With reference to the second aspect, in some implementations of the second aspect, the service request message includes a version list of the first service-based interface supported by the service invoking network element, the version list includes one or more versions, the version list is used by the service communication proxy to select a first service providing network element, and the first service providing network element supports at least one version in the version list.

With reference to the second aspect, in some implementations of the second aspect, the version list is carried in a user-defined hypertext transfer protocol HTTP header of the service request message, and the version preferentially selected by the service invoking network element is carried in a uniform resource identifier URI of the service request message.

With reference to the second aspect, in some implementations of the second aspect, the URI of the service request message includes a first version, and the first version indicates a version of the first service-based interface supported by the service invoking network element. Alternatively, the URI of the service request message does not include version information, and indicates that the service invoking network element supports all versions of the first service-based interface.

With reference to the second aspect, in some implementations of the second aspect, the service invoking network element receives a service response message sent by the service communication proxy. The service response message is from the first service providing network element, the first service providing network element is determined by the service communication proxy based on the service request message, and the first service providing network element and the service invoking network element support a same version of the first service-based interface.

With reference to the second aspect, in some implementations of the second aspect, the service response message includes a version of the first service-based interface selected by the service communication proxy.

According to a third aspect, a communication apparatus is provided. The apparatus includes: a transceiver unit, configured to receive a service request message sent by a service invoking network element, where the service request message is used to request to invoke a first service, the service request message indicates version information of a first service-based interface supported by the service invoking network element, and the first service-based interface is an interface corresponding to the first service; and a processing unit, configured to select a first service providing network element based on the service request message. The first service providing network element and the service invoking network element support a same version of the first service-based interface.

According to the apparatus provided in this embodiment of this application, the transceiver unit receives the service request message sent by the service invoking network element. The service request message indicates the version information of the first service-based interface supported by the service invoking network element, and the communication apparatus may select an appropriate service providing network element based on the service request message, to avoid a communication failure caused by inconsistency between interface versions supported by the service invoking network element and the service providing network element, and further improve service experience of a user.

With reference to the third aspect, in some implementations of the third aspect, the processing unit is further configured to obtain registration information of the service providing network element from a network repository function network element. The service providing network element is configured to provide the first service, the registration information includes a version list of the first service-based interface supported by one or more service providing network elements, and the version list includes one or more versions.

With reference to the third aspect, in some implementations of the third aspect, the service request message includes a version of the first service-based interface that is preferentially selected by the service invoking network element. The processing unit is specifically configured to determine, based on the registration information, that a service providing network element that is in the one or more service providing network elements and that supports the version of the first service-based interface that is preferentially selected by the service invoking network element is the first service providing network element.

With reference to the third aspect, in some implementations of the third aspect, the service request message further includes the version list of the first service-based interface supported by the service invoking network element, and the version list includes one or more versions. The processing unit is specifically configured to: determine that the service providing network element that supports the version of the first service-based interface that is preferentially selected by the service invoking network element does not exist in the one or more service providing network elements; and determine the first service providing network element according to a local configuration rule, where the first service providing network element supports at least one version in the version list.

With reference to the third aspect, in some implementations of the third aspect, the service request message includes the version list of the first service-based interface supported by the service invoking network element, and the version list includes one or more versions. If the version list of the first service-based interface supported by the service invoking network element includes one version, the processing unit is specifically configured to determine that a service providing network element that is in the one or more service providing network elements and that supports the one version is the first service providing network element. Alternatively, if the version list of the first service-based interface supported by the service invoking network element includes a plurality of versions, the processing unit is configured to determine the first service providing network element according to a local configuration rule. The first service providing network element supports at least one of the plurality of versions.

With reference to the third aspect, in some implementations of the third aspect, the version list is carried in a user-defined hypertext transfer protocol HTTP header of the service request message, and the version preferentially selected by the service invoking network element is carried in a uniform resource identifier URI of the service request message.

With reference to the third aspect, in some implementations of the third aspect, if the URI of the service request message includes a first version, and the first version indicates a version of the first service-based interface supported by the service invoking network element, the processing unit is specifically configured to determine that a service providing network element that is in the one or more service providing network elements and that supports the first version is the first service providing network element. Alternatively, if the URI of the service request message does not include version information, and indicates that the service invoking network element supports all versions of the first service-based interface, the processing unit is specifically configured to determine the first service providing network element according to a local configuration rule.

With reference to the third aspect, in some implementations of the third aspect, the local configuration rule includes at least one of the following rules: preferentially selecting a network element that supports a higher version or a lower version, preferentially selecting a network element with a higher priority, and preferentially selecting a lower-load network element.

With reference to the third aspect, in some implementations of the third aspect, the processing unit is specifically configured to determine that a version of the first service-based interface included in the URI of the service request message is inconsistent with a version of the first service-based interface selected by the processing unit. The processing unit is specifically configured to change the version of the first service-based interface included in the URI of the service request message to the version of the first service-based interface selected by the processing unit.

With reference to the third aspect, in some implementations of the third aspect, the transceiver unit is further configured to: receive a service response message sent by the first service providing network element; and send the service response message to the service invoking network element, where the service response message includes the version of the first service-based interface selected by the processing unit.

According to a fourth aspect, a communication apparatus is provided. The apparatus includes a sending unit, configured to send a service request message to a service communication proxy. The service request message is used to request to invoke a first service, the service request message indicates version information of a first service-based interface supported by the communication apparatus, and the first service-based interface is an interface corresponding to the first service.

With reference to the fourth aspect, in some implementations of the fourth aspect, the service request message includes a version of the first service-based interface that is preferentially selected by the communication apparatus, and the version of the first service-based interface that is preferentially selected by the communication apparatus is used by the service communication proxy to select a first service providing network element.

With reference to the fourth aspect, in some implementations of the fourth aspect, the service request message further includes a version list of the first service-based interface supported by the communication apparatus, the version list includes one or more versions, the version list is used by the service communication proxy to select the first service providing network element, and the first service providing network element supports at least one version in the version list.

With reference to the fourth aspect, in some implementations of the fourth aspect, the service request message includes a version list of the first service-based interface supported by the communication apparatus, the version list includes one or more versions, the version list is used by the service communication proxy to select a first service providing network element, and the first service providing network element supports one or more versions in the version list.

With reference to the fourth aspect, in some implementations of the fourth aspect, the version list is carried in a user-defined hypertext transfer protocol HTTP header of the service request message, and the version preferentially selected by the communication apparatus is carried in a uniform resource identifier URI of the service request message.

With reference to the fourth aspect, in some implementations of the fourth aspect, the URI of the service request message includes a first version, and the first version indicates a version of the first service-based interface supported by the communication apparatus. Alternatively, the URI of the service request message does not include version information, and indicates that the communication apparatus supports all versions of the first service-based interface.

With reference to the fourth aspect, in some implementations of the fourth aspect, the communication apparatus further includes a receiving unit, configured to receive a service response message sent by the service communication proxy. The service response message is from the first service providing network element, the first service providing network element is determined by the service communication proxy based on the service request message, and the first service providing network element and the communication apparatus support a same version of the first service-based interface.

With reference to the fourth aspect, in some implementations of the fourth aspect, the service response message includes a version of the first service-based interface selected by the service communication proxy.

According to a fifth aspect, a communication apparatus is provided. The apparatus may be a service communication proxy network element. Alternatively, the apparatus may be a chip. The apparatus has a function of implementing the service communication proxy in any one of the first aspect or the possible implementations of the first aspect. The function may be implemented by hardware, or may be implemented by hardware executing corresponding software. The hardware or the software includes one or more modules or units corresponding to the foregoing functions.

According to a sixth aspect, a communication apparatus is provided. The apparatus may be a service invoking network element, for example, an access and mobility management function network element. Alternatively, the apparatus may be a chip. The apparatus has a function of implementing the service invoking network element in any one of the second aspect or the possible implementations of the second aspect. The function may be implemented by hardware, or may be implemented by hardware executing corresponding software. The hardware or the software includes one or more modules or units corresponding to the foregoing functions.

According to a seventh aspect, a communication apparatus is provided. The apparatus includes a processor. The processor is coupled to a memory, and may be configured to execute instructions in the memory, to implement a function of a service discovery function network element according to any one of the first aspect and the second aspect or the possible implementations of the first aspect and the second aspect. Optionally, the apparatus further includes the memory. Optionally, the apparatus further includes a communication interface, and the processor is coupled to the communication interface.

According to an eighth aspect, a processor is provided. The processor includes an input circuit, an output circuit, and a processing circuit. The processing circuit is configured to: receive a signal through the input circuit, and transmit a signal through the output circuit, to enable the processor to perform the method according to any one of the first aspect and the second aspect or the possible implementations of the first aspect and the second aspect.

In a specific implementation process, the processor may be a chip, the input circuit may be an input pin, the output circuit may be an output pin, and the processing circuit may be a transistor, a gate circuit, a trigger, various logic circuits, and the like. An input signal received by the input circuit may be received and input by a receiver, a signal output by the output circuit may be output to a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a ninth aspect, an apparatus is provided. The apparatus includes a processor and a memory. The processor is configured to read instructions stored in the memory, and may receive a signal by using a receiver, and transmit a signal by using a transmitter, to perform the method according to any one of the first aspect and the second aspect or the possible implementations of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The apparatus in the ninth aspect may be a chip. The processor may be implemented by using hardware or software. When the processor is implemented by using the hardware, the processor may be a logic circuit, an integrated circuit, or the like; or when the processor is implemented by using the software, the processor may be a general-purpose processor, and is implemented by reading software code stored in the memory. The memory may be integrated into the processor, or may exist independently outside the processor.

According to a tenth aspect, a computer program product is provided. The computer program product includes a computer program (which may also be referred to as code or instructions). When the computer program is run, a computer is enabled to perform the method according to any one of the first aspect and the second aspect or the possible implementations of the first aspect and the second aspect.

According to an eleventh aspect, a computer-readable medium is provided. The computer-readable medium stores a computer program (which may also be referred to as code or instructions). When the computer program is run on a computer, the computer is enabled to perform the method according to any one of the first aspect and the second aspect or the possible implementations of the first aspect and the second aspect.

According to a twelfth aspect, a chip system is provided. The system includes a processor, configured to invoke a computer program from a memory and run the computer program, to enable a device installed with the chip system to perform the method according to any one of the first aspect and the second aspect or the possible implementations of the first aspect and the second aspect.

### BRIEF DESCRIPTION OF DRAWINGS

FIG. 1 is a diagram of a system architecture to which an embodiment of this application is applicable;
FIG. 2 is a schematic flowchart of a communication method 200 according to this application;
FIG. 3 is a schematic flowchart of a communication method 300 according to this application;
FIG. 4 is a schematic block diagram of a communication apparatus 400 according to this application;
FIG. 5 is a schematic block diagram of a communication apparatus 500 according to this application; and
FIG. 6 is a schematic block diagram of a communication apparatus 600 according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a worldwide interoperability for microwave access (worldwide interoperability for microwave access, WiMAX) communication system, a 5th generation (5th generation, 5G) communication system or a future communication system, for example, a 6th generation (6th generation, 6G) communication system, a vehicle-to-everything (vehicle-to-x, V2X) system, where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, a long term evolution-vehicle (long term evolution-vehicle, LTE-V) system, an internet of vehicles system, a machine type communication (machine type communication, MTC) system, an internet of things (internet of things, IoT) system, a long term evolution-machine (long term evolution-machine, LTE-M) system, and a machine to machine (machine to machine M2M) system.

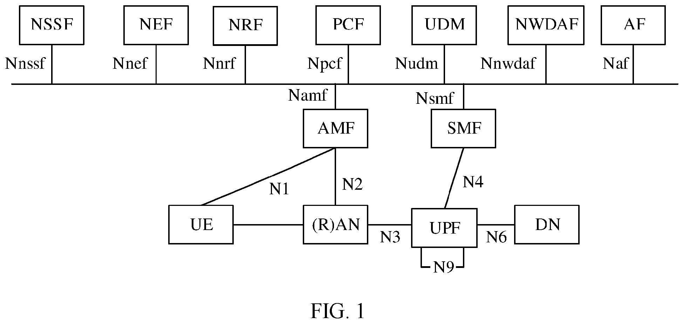

FIG. 1 is a schematic diagram of a network architecture applicable to a method according to an embodiment of this application. The network architecture may specifically include the following network elements.
1. User equipment (user equipment, UE) 110 may include various handheld devices having a wireless communication function, vehicle-mounted devices, wearable devices, computing devices, or other processing devices connected to a wireless modem, various forms of terminals, mobile stations (mobile stations, MSs), terminals (terminals), soft clients, and the like, for example, water meters, electricity meters, and sensors.

For example, user equipment in embodiments of this application may be an access terminal, a user unit, a user station, a mobile station, a relay station, a remote station, a remote terminal, a mobile device, a user terminal (user terminal), a terminal device (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a 5G network, user equipment in a future evolved public land mobile network (public land mobile network, PLMN), user equipment in a future internet of vehicles, or the like. This is not limited in this application.

By way of example, and not limitation, in embodiments of this application, the wearable device may also be referred to as a wearable smart device, and is a general term of wearable devices developed by intelligently designing daily wear by using a wearable technology, such as glasses, gloves, a watch, clothing, and shoes. The wearable device is a portable device that can be directly worn on a body or integrated into clothes or an accessory of a user. The wearable device is not only a hardware device, and can further implements a powerful function through software support, data exchange, and cloud interaction. In broad sense, wearable smart devices include full-featured and large-sized devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the user equipment in embodiments of this application may alternatively be user equipment in an internet of things (internet of things, IoT) system. The IoT is an important part in future development of information technologies. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving through for example, a narrowband (narrowband, NB) technology. In addition, in embodiments of this application, the user equipment may further include a sensor such as an intelligent printer, a train detector, and a gas station. Main functions include collecting data (some user equipment), receiving control information and downlink data of an access network device, sending an electromagnetic wave, and transmitting uplink data to the access network device.

2. A (radio) access network ((radio) access network, (R)AN) device is configured to provide a network access function for authorized user equipment in a specific area, and can use transmission tunnels of different quality based on user equipment levels, service requirements, or the like.

A RAN can manage radio resources and provide an access service for user equipment, to forward a control signal and user equipment data between the user equipment and a core network. The RAN may also be understood as a base station in a conventional network.

For example, the access network device in embodiments of this application may be any communication device having a wireless transceiver function for communicating with the user equipment. The access network device includes but is not limited to: an evolved NodeB (evolved NodeB, eNB), a baseband unit (baseband unit, BBU), and an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system, or the like. Alternatively, the device may be a gNB or a transmission point (TRP or TP) in a 5G system such as an NR system, one antenna panel or a group of antenna panels (including a plurality of antenna panels) of a base station in the 5G system, or a network node, for example, a baseband unit (BBU) or a distributed unit (distributed unit, DU), that constitutes the gNB or the transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in an access network (radio access network, RAN), or the CU may be classified as an access network device in the core network (core network, CN). This is not limited in this application.

3. A user plane function (user plane function, UPF) network element is used for packet routing and forwarding, quality of service (quality of service, QoS) processing of user plane data, and the like. User data may be accessed to a data network (data network, DN) via this network element. In this embodiment of this application, the user plane function network element may be configured to implement a function of a user plane network element.

4. The data network (data network, DN) is configured to provide a network for data transmission, for example, an operator service network, the Internet (Internet), and a third-party service network.

5. An authentication server function (authentication server function, AUSF) network element is mainly used for user authentication and the like.

6. An access and mobility management function (access and mobility management function, AMF) network element is mainly used for mobility management, access management, and the like, and may further be configured to implement a function other than session management in functions of a mobility management entity (mobility management entity, MME), for example, a function of access authorization/authentication.

7. A session management function (session management function, SMF) network element is mainly used for session management, allocation and management of internet protocol (internet protocol, IP) addresses of terminal devices, selection and management of a user plane function, a termination point of a policy control and charging function interface, downlink data notification, and the like.

8. A policy control function (policy control function, PCF) network element is a unified policy framework for instructing network behavior, and provides policy rule information and the like for a network network element (for example, an AMF network element or an SMF network element) or a terminal device.

9. A network exposure function (network exposure function, NEF) network element is configured to securely expose, to the outside, a service, a capability, and the like that are provided by a 3rd generation partnership project (3GPP) network function.

10. A network repository function (network repository function, NRF) network element is configured to: store description information of a network functional entity and a service provided by the network functional entity, and support functions of service discovery, network element entity discovery, and the like.

11. A unified data management (unified data management, UDM) network element is used for unified data management, 5G user data management, user identifier processing, access authentication, registration, mobility management, or the like.

12. An application function (application function, AF) network element is configured to: route data affected by an application, access a network exposure function network element, interact with a policy framework to perform policy control, or the like.

13. A network slice selection function (network slice selection function, NSSF) network element is configured to manage information related to a network slice.

14. A service communication proxy (service communication proxy, SCP) is used for supporting indirect communication, to be specific, message forwarding and routing between a service invoking network element and a service providing network element, selection and discovery of the service providing network element, and the like. In a 5G communication system, the service communication proxy may be an SCP. In a future communication system (for example, a 6G communication system), the service communication proxy may still be an SCP, or may have another name. This is not limited in this application.

In addition, the network architecture may further include: a UE radio capability management function (UE radio capability management function, UCMF) network element, configured to: store and manage a radio capability of a terminal device in a network; and a binding support function (binding support function, BSF) network element, configured to maintain a correspondence between a user IP address and a serving network element function.

It should be noted that the "network element" may alternatively be referred to as an entity, a device, an apparatus, a module, or the like. This is not particularly limited in this application. In addition, in this application, for ease of understanding and description, the description of the "network element" is omitted in some descriptions. For example, an SMF network element is briefly referred to as an SMF. In this case, the "SMF" should be understood as an SMF network element or an SMF entity. Descriptions of a same or similar situation are omitted below.

It may be understood that the network elements or the functions may be network elements in a hardware device, may be software functions running on dedicated hardware, or may be virtualized functions instantiated on a platform (for example, a cloud platform).

It should be understood that the network elements included in the communication system described above are merely examples for descriptions, and this application is not limited thereto.

In the network architecture, an N1 interface is an interface between a terminal device and a core network control plane, and is configured to transmit non-access stratum (non-access stratum, NAS) signaling. An N2 interface is an interface between the RAN and the AMF network element, and is configured to send a NAS message and the like. An N3 interface is an interface between the RAN and the UPF network element, and is configured to transmit the user plane data and the like. An N4 interface is an interface between the SMF network element and the UPF network element, and is configured to transmit information such as tunnel identification information of an N3 connection, data buffer indication information, and a downlink data notification message, and may be further configured to perform policy configuration on the UPF. An N6 interface is an interface between the UPF network element and a DN network element, and is configured to transmit the user plane data. An N9 interface is an interface between the UPF network element and another UPF network element.

It should be understood that the network architecture applied to this embodiment of this application is merely an example of a network architecture described from a perspective of a service-based architecture, and a network architecture applicable to this embodiment of this application is not limited thereto. Any network architecture that can implement functions of the network elements is applicable to this embodiment of this application.

For example, in some network architectures, network functional entities such as an AMF, an SMF, a PCF, and a UDM are all referred to as network function NF network elements. Alternatively, in some other network architectures, a set of network elements such as an AMF, an SMF, a PCF, and a UDM may be referred to as a control plane function (control plane function, CPF) network element.

It should be noted that names of network elements and interfaces in this application are merely examples. This application does not exclude a case in which the network elements have other names and functions of the network elements are combined. With evolution of technologies, any device or network element that can implement the functions of the network elements falls within the protection scope of this application.

In the service-based architecture, each network element may invoke or provide a corresponding service through a service-based interface (service-based interface, SBI). For example, the PCF may provide a service such as policy rule information for a network element (for example, the AMF or the SMF) or the terminal device through an Npcf service-based interface. Similarly, the AMF or the SMF may invoke, through the Npcf service-based interface, a service provided by the PCF.

In this application, a network element configured to provide a service may be referred to as a service providing network element, and correspondingly, a network element requesting a service may be referred to as a service invoking network element.

It should be understood that the service providing network element and the service invoking network element are classified based on a function that is of providing or invoking a service and that the network element has in one service invocation. In the network architecture, a network element may be a service providing network element, or may be a service invoking network element. For example, when the PCF provides the policy rule information service for the SMF network element through the Npcf service-based interface, the SMF network element may be referred to as a service invoking network element. In addition, another network element may further request the SMF to provide a service of a session management function. In this case, the SMF network element may be referred to as a service providing network element in this service invoking process.

In other words, a network element in a range of the service-based architecture may be a service providing network element, or may be a service invoking network element. In addition, the service invoking network element may alternatively be a network element or a device outside the range of the service-based architecture. For example, the service invoking network element may be a terminal device.

A service that needs to be invoked by the service invoking network element may be provided by a plurality of network elements of a same network function type. The plurality of network elements may provide service-based interfaces of a same version or different versions. For example, both a service providing network element #1 and a service providing network element #2 may be configured to provide a first service, the service providing network element #1 may provide a V1 version of the service-based interface, and the service providing network element #2 may provide a V2 version of the service-based interface. Alternatively, both the service providing network element #1 and the service providing network element #2 may provide V1, V2, and V3 versions of the service-based interface. For an interface of the invoked service, the service invoking network element supports one or more versions. For example, for the first service, the service invoking network element supports the V1 version. Usually, the service providing network element registers all version information of a service-based interface provided by the service providing network element with the NRF. When the service invoking network element needs to communicate with the service providing network element, the service invoking network element may select an appropriate version from all versions of the service providing network element registered in the NRF. For example, the service invoking network element may select a service providing network element that provides a version supported by the service invoking network element. For example, for the first service, if the service invoking network element supports the V1 version, the service invoking network element may select a service providing network element that also supports the first service of the V1 version, and communicate with the service providing network element through a service-based interface of the V1 version. To be specific, the service invoking network element sets version information in a uniform resource identifier (uniform resource identifier, URI) in a hypertext transfer protocol (hypertext transfer protocol, HTTP) message sent to the service providing network element to the V1 version.

In the 5G network, the service invoking network element may select a service providing network element by using an SCP. The SCP is deployed at a front end of the service providing network element, that is, between the service providing network element and the service invoking network element. When the service invoking network element and the service providing network element support one or more versions of a service-based interface, the SCP needs to select a service providing network element that matches the version for communication with the service invoking network element, to avoid that version inconsistency causes a communication failure, and consequently affects service experience of a user.

In view of this, embodiments of this application provide a communication method and an apparatus. In the method, a service providing network element that matches a version may be selected to communicate with a service invoking network element, to improve service experience of a user.

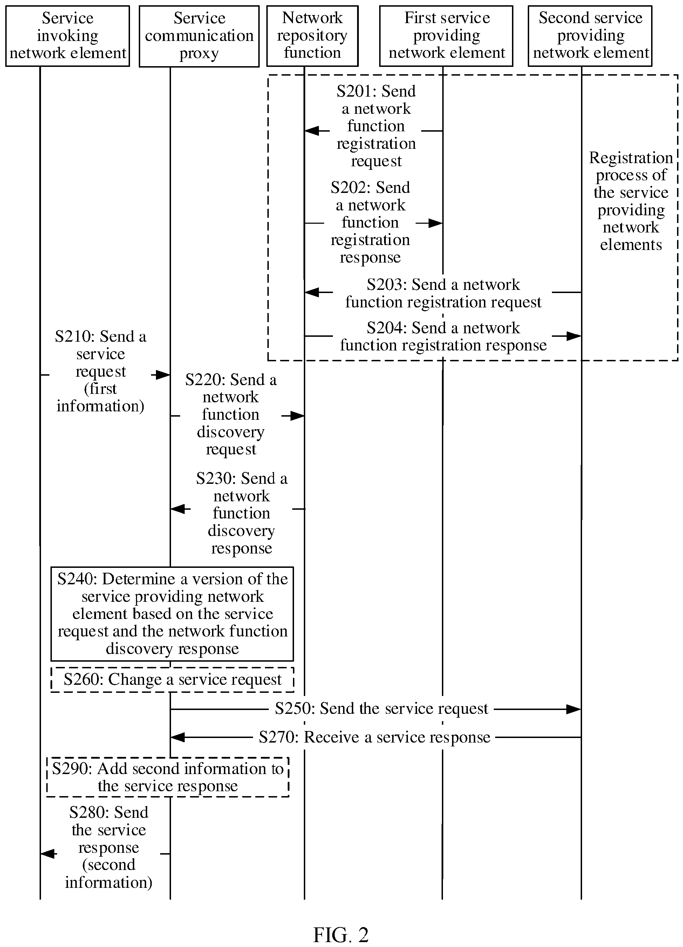

The following describes in detail the communication method provided in embodiments of this application with reference to the accompanying drawings. FIG. 2 is a schematic flowchart of a communication method according to an embodiment of this application. For brevity, two service providing network elements (a service providing network element #1 and a service providing network element #2) having a same network function type are used as an example for description in this application. The two service providing network elements may provide a same service, and the two service providing network elements provide different versions of a service-based interface. For example, the service providing network element #1 may provide a V3 version of a service-based interface, and the service providing network element #2 may provide a V2 version of the service-based interface. Alternatively, the two service providing network elements may separately provide a plurality of versions of the service-based interface.

The method includes at least the following several steps.

S201: The service providing network element #1 sends a network function registration request to a network repository function.

The network function registration request may include registration information of the service providing network element #1. The registration information may include a network function type of the service providing network element #1, for example, a session management function, a supported service type of the service providing network element #1, for example, a PDU session service, and a version list of a first service-based interface provided by the service providing network element #1, for example, a V3 version. The first service-based interface is configured to provide a service supported by the service providing network element #1, for example, the PDU session service.

Correspondingly, in S202, the network repository function sends a network function registration response to the service providing network element #1, to notify whether a network function is registered successfully.

Similarly, in S203, the service providing network element #2 sends a network function registration request to the network repository function. The network function registration request may include registration information of the service providing network element #2. The registration information may include a network function type of the service providing network element #2, a supported service type of the service providing network element #2, and a version list corresponding to a first service-based interface provided by the service providing network element #2, for example, V3.

Correspondingly, in S204, the network repository function sends a network function registration response to the service providing network element #2, to notify whether a network function is registered successfully.

S201 to S204 are a process in which the service providing network element completes service registration. The service providing network element #1 and the service providing network element #2 are merely an example of the service providing network element. There may be one or more service providing network elements. The one or more service providing network elements may provide service-based interfaces of different versions of one service, may provide service-based interfaces of a same version of one service, or may provide service-based interfaces of a plurality of versions of one service.

S210: A service invoking network element sends a service request message to a service communication proxy, and correspondingly, the service communication proxy receives the service request message.

When the service invoking network element needs to invoke a first service, the service invoking network element may send the service request message to the service communication proxy. The service request message may include first indication information. The first indication information indicates the service communication proxy to select a service providing network element corresponding to the first indication information. The first indication information may include network function type information of the service providing network element, service type information of the first service, and the like. For example, the service request message may include a user-defined HTTP header, and the user-defined HTTP header may carry the first indication information.

The service request message may further indicate version information of a first service-based interface supported by the service invoking network element. The first service-based interface is a service-based interface corresponding to the first service.

In a possible implementation, the service request message may include first information, and the first information includes a version of the first service-based interface that is preferentially selected by the service invoking network element. Alternatively, the first information may further include a version of the first service-based interface that is preferentially selected by the service invoking network element and a version list of the first service-based interface that is supported by the service invoking network element. The version list may include one or more versions. The version list may be carried by using a newly added user-defined HTTP header, or may be carried by using an existing user-defined HTTP header. The version preferentially selected by the service invoking network element may be carried by using a URI of the service request message, may be carried by using the newly added user-defined HTTP header, or may be carried by using the existing user-defined HTTP header.

For example, if the service invoking network element supports only one version of the first service-based interface, for example, supports only the V3 version, the version list supported by the service invoking network element includes V3. The version preferentially selected by the service invoking network element is V3, and a version number in the URI of the service request message may be set to V3, to indicate that the service invoking network element preferentially selects the V3 version of the first service-based interface.

For another example, if the service invoking network element supports a plurality of versions but not all versions of the first service-based interface, for example, supports V2 and V3, the version list supported by the service invoking network element includes V2 and V3. The version preferentially selected by the service invoking network element may be V2 or V3, and the version number in the URI of the service request message may be set to V2 or V3, to indicate that the service invoking network element preferentially selects the V2 or V3 version.

Alternatively, if the service invoking network element supports all V1, V2, and V3 versions of the first service-based interface, the version list supported by the service invoking network element includes V1, V2, and V3. The version preferentially selected by the service invoking network element may be V1, V2, or V3, and the version number in the URI of the service request message may be set to V 1, V2, or V3, to indicate that the service invoking network element preferentially selects V1, V2, or V3.

If the version preferentially selected by the service invoking network element is carried by using the newly added user-defined HTTP header or the existing user-defined HTTP header, the version number in the URI of the service request message may be any version supported by the service invoking network element, or the URI of the service request message may not include the version information.

In another possible implementation, the first information may include the version list of the first service-based interface supported by the service invoking network element, and the version list may include one or more versions. For example, the version list may be carried by using the newly added user-defined HTTP header, or may be carried by using the existing user-defined HTTP header.

When the first information includes only the version list of the first service-based interface supported by the service invoking network element, the version number in the URI of the service request message may be any version supported by the service invoking network element, or the URI of the service request message does not include a version.

For example, if the service invoking network element supports all V1, V2, and V3 versions of the first service-based interface, the version list supported by the service invoking network element includes V1, V2, and V3. The URI of the service request message may not include the version information.

Optionally, the service request message may further indicate the version information of the first service-based interface supported by the service invoking network element. For example, if the URI of the service request message includes version information, the service invoking network element supports only a version corresponding to the version information. Alternatively, if the URI of the service request message does not include the version information, the service invoking network element supports all versions of the first service-based interface.

According to the method in this embodiment of this application, the service communication proxy receives the service request message sent by the service invoking network element. The service request message indicates the version information of the first service-based interface supported by the service invoking network element, and the service communication proxy may select an appropriate service providing network element based on the service request message, to avoid a communication failure caused by inconsistency between interface versions supported by the service invoking network element and the service providing network element, and further improve service experience of a user.

S220: The service communication proxy sends a network function discovery request to the network repository function, and correspondingly, the network repository function receives the request message.

After receiving the service request message, the service communication proxy may send a network function discovery request message to the network repository function, to request to discover registration information of a service providing network element registered in a network repository. The network function discovery request message may carry the first indication information.

S230: The network repository function sends a network function discovery response to the service communication proxy, and correspondingly, the service communication proxy receives the network function discovery response.

After receiving the network function discovery request, the network repository function may determine, based on the network function discovery request, a service providing network element that matches the first indication information. For example, the service providing network element #1 and the service providing network element #2 are network elements that match the first indication information. The network repository function may send a network function discovery response message to the service communication proxy. The response message may include registration information of the service providing network element #1 and the service providing network element #2. The registration information includes a version list of the first service-based interface provided by the service providing network element #1 and the service providing network element #2, and the version list includes one or more versions.

S240: The service communication proxy determines a first service providing network element based on the service request message and the network function discovery response.

The first service providing network element includes a network element that is determined by the service communication proxy and that is configured to provide a service for the service invoking network element. Specifically, if the first information in the service request message includes the version list of the first service-based interface supported by the service invoking network element and the version of the first service-based interface that is preferentially selected by the service invoking network element, the service communication proxy preferentially selects a service providing network element that provides the version preferentially selected by the service invoking network element as the first service providing network element.

For example, if the version list supported by the service invoking network element includes the V3 version, and the V3 version is preferentially selected by the service invoking network element, the service communication proxy selects the service providing network element #1 that also supports the V3 version.

For another example, if the version list supported by the service invoking network element includes the V2 version and the V3 version, and the service invoking network element preferentially selects the V2 version, the service communication proxy selects, based on the version preferentially selected by the service invoking network element, for example, a version (for example, the V2 version) carried in the URI of the service request message, the service providing network element #2 that also supports the V2 version as the first service providing network element. Alternatively, if no service providing network element supports the preferentially selected version, the service communication proxy selects a service providing network element that supports another version supported by the service invoking network element, for example, the service providing network element #1 that supports the V3 version.

In other words, the service communication proxy preferentially selects a service providing network element that supports the version preferentially selected by the service invoking network element. If no service providing network element that supports the preferentially selected version exists, the service communication proxy selects a service providing network element that supports another version in the version list supported by the service invoking network element.

Optionally, if the service request message includes only the version list supported by the service invoking network element, the service communication proxy selects a service providing network element that supports one or more versions in the version list as the first service providing network element.

Specifically, if the version list includes only one version, the service communication proxy determines that a service providing network element that supports the version is the first service providing network element. For example, if the version list supported by the service invoking network element includes only the V3 version, the service communication proxy selects the service providing network element #1 that also supports the V3 version.

If the version list supported by the service invoking network element includes a plurality of versions, the service communication proxy may select, according to a local configuration rule, for example, a principle of preferentially selecting a network element supporting a higher version, preferentially selecting a network element supporting a lower version, load sharing selection, or priority selection, a service providing network element that supports information about one or more versions in the version list.

For example, if the version list supported by the service invoking network element includes the V2 version and the V3 version, the service communication proxy may select one network element with lower load from the service providing network element #1 and the service providing network element #2 as the first service providing network element.

For another example, if the version list supported by the service invoking network element includes V1, V2, and V3, the V3 version is higher than the V2 version, and the V2 version is higher than the V1 version, the service communication proxy determines that the service providing network element #1 supporting a highest version is used as the first service providing network element. A higher version or a lower version may refer to a version with a higher priority or a version with a lower priority, update time information of a version, or the like. This is not limited in this application.

Optionally, when the service request message indicates the version information supported by the service invoking network element, there are two cases in which the service communication proxy determines the first service providing network element based on whether the URI includes the version supported by the service invoking network element.

Case 1: If the URI of the service request message includes a version, it indicates that the service invoking network element supports the version, and the service invoking network element determines that a service providing network element that supports the version is the first service providing network element. For example, if the URI of the service request message includes V3, the service communication proxy selects the service providing network element #1 that also supports the V3 version as the first service providing network element.

Case 2: If the URI of the service request message does not include version information, it indicates that the service invoking network element supports all versions of the first service-based interface. When it indicates that the service invoking network element supports all versions, the service communication proxy selects, according to the local configuration rule, a service providing network element that supports one or more versions. For example, if the URI of the service request message does not include a version, the service communication proxy selects the service providing network element #1 that supports the V1 version as the first service providing network element.

S250: The service communication proxy sends the service request message to the first service providing network element, and correspondingly, the first service providing network element receives the service request message.

The service request message is used for requesting the first service providing network element to provide a first service for the service invoking network element.

Optionally, before the service communication proxy sends the service request message, the method may further include S260: The service communication proxy changes a version in a URI of the service request message.

Specifically, when the service communication proxy network element selects the first service providing network element, the service communication proxy selects a version of the first service-based interface at the same time. In other words, the URI of the service request message needs to include the version. For example, if the version list supported by the service invoking network element includes V1, V2, and V3, and the service communication proxy selects the service providing network element #1 that supports the V1 version as the first service providing network element, the version of the first service-based interface is V1, and the version in the URI of the service request message is V1. If the version of the first service-based interface is different from the version included in the URI of the service request message, the service communication proxy changes the version included in the URI of the service request message to the version of the first service-based interface.

For example, when the service request message indicates that the service invoking network element supports the version information of the first service-based interface, if the URI of the request message does not include the version, the service communication proxy may add the version of the first service-based interface to the URI of the service request message.

For another example, when the URI of the request message includes the version preferentially selected by the service invoking network element, for example, preferentially selected V3, if the service providing network element does not support the preferentially selected version, for example, the service providing network element supports the V1 and V2 version, and the service communication proxy determines, according to the local configuration rule, that the service providing network element is the first service providing network element, and selects the V1 version as the version of the first service-based interface, the service communication proxy may change the version included in the URI of the service request message to the version of the first service-based interface, to be specific, change the V3 version to the V1 version.

S270: The first service providing network element sends a service response to the service communication proxy, and correspondingly, the service communication proxy receives the service response.

S280: The service communication proxy sends the service response to the service invoking network element, and correspondingly, the service invoking network element receives the service response.

Optionally, before the service communication proxy sends the service response, the method may further include S290: Add second information to the service response, where the second information indicates the version of the first service-based interface.

Specifically, if the service communication proxy determines that a service response message does not include an HTTP location (location) header, the service communication proxy adds the version of the first service-based interface to the service response. The version may be carried by using the newly added user-defined HTTP header or the existing user-defined HTTP header.

After receiving the service response message, the service invoking network element may learn of, based on an HTTP header in the service response message, a version of the first service-based interface selected by the service communication proxy. Subsequently, when the service invoking network element sends a new service request to the first service providing network element, the URI of the service request message may include the version.

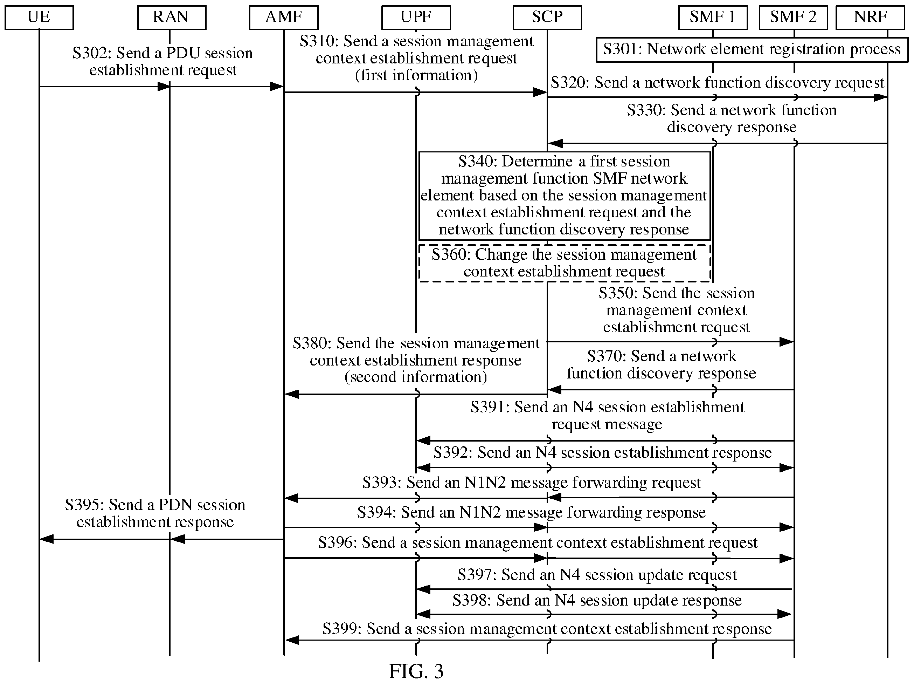

The following describes in detail the communication method provided in this application with reference to a PDU session establishment process of a terminal device. As shown in FIG. 3, the method includes at least the following several steps.

S301: Process in which an SMF registers with an NRF.

The SMF is a service providing network element in a PDU session establishment process of the terminal device. The service providing network element may include a plurality of SMFs that support service-based interfaces of different versions, for example, an SMF #1 and an SMF #2. For the registration process, refer to S201 to S204. Registration information may include a version list of a service-based interface provided by the SMF #1 and the SMF #2.

S302: The terminal device sends a PDU session establishment request to an AMF, and correspondingly, the AMF receives the PDU session establishment request.

The terminal device may forward the PDU session establishment request by using the RAN. The PDU session establishment request is used to request to establish a connection to a specific data network, and the connection is used for service transmission between the terminal device and the data network.

S310: The AMF may send a session management context establishment request (Nsmf_PDUSession_CreateSMContext Request) to an SCP, and correspondingly, the SCP receives the session management context establishment request.

After receiving the PDU session establishment request, the AMF needs to invoke a session management service (an example of a first service) provided by the SMF network element, to notify the SMF network element to establish a PDU session. The AMF may select an appropriate SMF by using the SCP and forward the session management context establishment request.

Specifically, the session management context establishment request may include first indication information. The first indication information indicates the SCP to select a service providing network element that provides a session management service. The first indication information may include network function type information, service type information, and the like of the service providing network element. For example, the service request message may include a user-defined HTTP header, and the user-defined HTTP header may carry the first indication information.

The session management context establishment request may further include first information. The first information includes a version list of a first service-based interface supported by the AMF and a version preferentially selected by the AMF network element. The first service-based interface is configured to invoke the session management service.

In a possible implementation, the first information may include the version list of the first service-based interface supported by the AMF network element and the version preferentially selected by the AMF network element. The version list may include one or more versions supported by the AMF network element. The version list supported by the AMF network element may be carried by using a newly added user-defined HTTP header, or may be carried by using an existing user-defined HTTP header. The version preferentially selected by the AMF network element may be carried by using the URI of the session management context establishment request, may be carried by using the newly added user-defined HTTP header, or may be carried by using the existing user-defined HTTP header.

For example, if the AMF network element supports only one version of the first service-based interface, for example, a V3 version, the version list supported by the AMF network element includes V3. The version preferentially selected by the AMF network element is V3, and a version number in the URI of the session management context establishment request may be set to V3 (for example, {apiRoot}/nsmf-pdusession/v3/sm-contexts), to indicate that the AMF network element preferentially selects the V3 version.

For another example, if the AMF network element supports a plurality of versions but not all versions of the first service-based interface, for example, supports V2 and V3, the version list supported by the AMF network element includes V2 and V3. The version preferentially selected by the AMF network element may be V2 or V3, and the version number in the URI of the session management context establishment request may be set to V2 or V3 (for example, {apiRoot}/nsmf-pdusession/v3/sm-contexts).

Alternatively, if the AMF network element supports all V1, V2, and V3 versions of the first service-based interface, the version list supported by the AMF network element includes V1, V2, and V3. The version preferentially selected by the AMF network element may be V1, V2, or V3, and the version number in the URI of the service request message may indicate that the service invoking network element preferentially selects V1, V2, or V3 (for example, {apiRoot}/nsmf-pdusession/v1/sm-contexts).

If the preferentially selected version is carried by using the newly added user-defined HTTP header or the existing user-defined HTTP header, the version number in the URI of the service request message may be any version supported by the service invoking network element, or the URI of the service request message may not include a version (for example, {apiRoot}/nsmf-pdusession//sm-contexts or {apiRoot}/nsmf-pdusession/sm-contexts).

In another possible implementation, the first information may include capability information of the version of the first service-based interface supported by the AMF network element. In other words, the first information includes the version list of the first service-based interface supported by the AMF network element. The version list may include one or more versions. For example, a version capability supported by the AMF network element may be carried by using the newly added user-defined HTTP header, or may be carried by using the existing user-defined HTTP header.

In this case, the version number in the URI of the session management context establishment request may be any version supported by the AMF network element, or the URI of the session management context establishment request does not include a version.

For example, if the AMF network element supports all versions of the first service-based interface, the version list supported by the AMF network element includes V1, V2, and V3. The URI of the session management context establishment request does not include a version ({ apiRoot }/nsmf-pdusession/sm-contexts).

Optionally, the session management context establishment request may further indicate the capability information of the version of the first service-based interface supported by the AMF network element. For example, if the URI of the session management context establishment request includes a version number, it indicates that the AMF network element supports a version corresponding to the version number. Alternatively, if the URI of the session management context establishment request does not include version information, the AMF network element supports all versions of the first service-based interface.

According to the method in this embodiment of this application, the SCP receives a service request message sent by the AMF network element. The service request message indicates version information of the first service-based interface version supported by the AMF network element, and the SCP may select an appropriate SMF network element based on the service request message, to avoid a communication failure caused by inconsistency between interface versions supported by the AMF network element and the SMF network element, and further improve service experience of a user.

S320: The SCP sends a network function discovery request to the NRF, and correspondingly, the NRF receives the request message.

After receiving the session management context establishment request, the SCP may send a network function discovery request message to the NRF, to request information about the SMF network element registered in the NRF. The network function discovery request message may carry the first indication information.

S330: The NRF sends a network function discovery response to the SCP, and correspondingly, the SCP receives the network function discovery response.

After receiving the network function discovery request, the NRF may determine, based on the network function discovery request, a service providing network element that matches the first indication information, for example, the SMF #1 network element and the SMF #2 network element. The network repository function may send a network function discovery response message to the service communication proxy. The response message includes registration information (NFProfile) of the SMF #1 network element and the SMF #2 network element. The registration information includes a version list of the first service-based interface provided by the SMF #1 network element and the SMF #2 network element, and the version list may include one or more versions. For example, the SMF #1 provides the V3 version of the first service-based interface of the session management service, and the SMF #2 provides the V2 version of the first service-based interface of the session management service.

S340: The SCP determines a first SMF network element based on the session management context establishment request and the network function discovery response.

The first SMF network element includes a network element that is selected by the SCP and that is configured to provide a session management service for the AMF network element. Specifically, if the first information of the session management context establishment request includes a version list of the first service-based interface supported by the AMF network element and a version of the first service-based interface preferentially selected by the AMF network element, the SCP preferentially determines that a session management function network element that is in the session management function network elements and that provides the version of the first service-based interface preferentially selected by the AMF network element is the first SMF network element.

For example, if the version list supported by the AMF network element includes the V3 version, and the AMF network element preferentially selects the V3 version, the SCP selects the SMF #1 network element that also supports the V3 version.

For another example, if the version list supported by the AMF network element includes the V2 version and the V3 version, and the AMF network element preferentially selects the V2 version, the SCP determines, based on the version preferentially selected by the AMF network element, for example, the version (for example, the V2 version) carried in the URI of the session management context establishment request, that the SMF #2 network element that also supports the V2 version is the first SMF network element. Alternatively, if no session management function network element supports the preferentially selected V2 version, the SCP selects a session management function network element that supports another version supported by the AMF network element, for example, the SMF #1 network element that supports the V3 version.

In other words, the SCP preferentially selects a session management function network element that provides the version preferentially selected by the AMF network element. If there is no session management function network element that provides the preferentially selected version, the SCP selects a session management function network element that provides another version in the version list.

Optionally, if the first information of the session management context establishment request includes only the version list supported by the AMF network element, the SCP network element determines that a session management function network element that supports one or more versions in the version list is the first SMF network element.

Specifically, if the version list includes only one version, the SCP determines that a session management function network element that provides the version is the first SMF network element. For example, if the version list supported by the AMF network element includes only the V3 version, the SCP selects the SMF #1 network element that also provides the V3 version.

Optionally, if the version list supported by the AMF network element includes a plurality of versions, the SCP may select, according to a local configuration rule, for example, a principle of preferentially selecting a network element providing a higher version, preferentially selecting a network element providing a lower version, preferentially selecting a lower-load network element, or selecting a network element based on a priority, the session management function network element that supports the one or more versions in the version list as the first SMF network element.

For example, if the version list supported by the AMF network element includes the V2 version and the V3 version, the SCP may select one network element with lower load from the SMF #1 network element and the SMF #2 network element as the first SMF network element.

For another example, if the version list supported by the AMF network element includes V1, V2, and V3, the V3 version is higher than the V2 version, and the V2 version is higher than the V1 version, the SCP determines that the SMF #1 network element that provides a highest version is used as the first SMF network element. A higher version or a lower version may refer to a version with a higher priority or a version with a lower priority, update time information of a version, or the like. This is not limited in this application.

Optionally, when the session management context establishment request indicates the version information supported by the AMF network element, there are two cases in which the SCP determines the first SMF network element based on whether the URI includes the version supported by the AMF network element.

Case 1: If the URI of the session management context establishment request includes a version, the SCP network element determines that a session management function network element that supports the version is the first SMF network element. For example, if the URI of the session management context establishment request includes V3, the SCP selects the SMF #1 network element that also supports the V3 version as the first SMF network element.

Case 2: If the URI of the session management context establishment request does not include the version information, to be specific, indicates that the AMF network element supports all versions, the SCP selects, according to the local configuration rule, one session management function network element that supports one or more versions as the first SMF network element.

S350: The SCP sends the session management context establishment request to the first SMF network element, and correspondingly, the first SMF network element receives the session management context establishment request.

The session management context establishment request is used for requesting the first SMF network element to provide the session management service for the AMF network element.

Optionally, before the SCP sends the session management context establishment request, the method may further include S360: The SCP changes a version in the URI of the session management context establishment request.

Specifically, when the service communication proxy network element selects the first SMF network element, the service communication proxy selects a version of the first service-based interface at the same time. In other words, the URI of the session management context establishment request needs to include the version. For example, if the version list supported by the AMF network element includes V1, V2, and V3, and the service communication proxy selects the SMF network element #1 that supports the V1 version as the first SMF network element, the version of the first service-based interface is V1, and the version in the URI of the session management context establishment request is V1. The SCP may determine, based on the determined version of the first service-based interface, whether to change the version included in the URI of the session management context establishment request. If the determined version of the first service-based interface is different from the version included in the URI of the session management context establishment request, the SCP determines to change the version included in the URI of the session management context establishment request to the version of the first service-based interface.

For example, when the session management context establishment request indicates the version information supported by the AMF network element, if the URI of the session management context establishment request does not include the version information, the SCP may add the version of the first service-based interface to the URI of the session management context establishment request.

For another example, when the URI of the session management context establishment request includes the version preferentially selected by the AMF network element, for example, V3, if the session management function network element does not support the preferentially selected version, for example, the session management function supports the V1 version and the V2 version, and the SCP determines the first SMF network element according to the local configuration rule, and selects the version of the first service-based interface as V1, the SCP may change the version included in the URI of the session management context establishment request to the version of the first service-based interface, to be specific, change V3 to V1.

S370: The first SMF network element sends a session management context establishment response to the SCP, and correspondingly, the SCP receives the session management context establishment response.

The session management context establishment response (Nsmf_PDUSession_CreateSMContext) may include an HTTP location (location) header. The HTTP location header includes a version, and the version is the same as the version included in the URI of the session management context establishment request sent by the SCP to the first SMF network element.

S380: The SCP sends the session management context establishment response to the AMF network element, and correspondingly, the AMF network element receives the session management context establishment response.

Optionally, before the SCP sends the session management context establishment response, the method may further include S390: Add second information to the session management context establishment response, where the second information indicates the version of the first service-based interface.

Specifically, if the session management context establishment response in S370 does not include the HTTP location header, the SCP adds the version of the first service-based interface to the session management context establishment response. The version is the same as the version included in the URI of the session management context establishment request sent by the SCP to the first SMF network element. The version may be carried by using the newly added user-defined HTTP header or the existing user-defined HTTP header.

After receiving a session management context establishment response message, the AMF network element may learn of, based on the version included in the HTTP location header in the session management context establishment response or based on the version added in S390, a version selected by the SCP. Subsequently, when the AMF network element sends a new service request to the first SMF network element, a URI of the service request message may include the version.

S391: The first SMF network element sends an N4 session establishment request message to a selected UPF network element.

S392: The UPF network element returns an N4 session establishment response, where the response message may include routing information allocated by the UPF network element.

S393: The first SMF network element sends an N1N2 message forwarding request (Namf_Communication_N1N2MessageTransfer) to the AMF network element, where the request message includes the routing information allocated by the UPF network element. Correspondingly, the AMF network element receives the N1N2 message forwarding request.

S394: The AMF network element sends an N1N2 message forwarding response (Namf_Communication_N1N2MessageTransfer Response) to the first SMF network element.

S395: The AMF network element sends a PDN session establishment response to the terminal device, and the AMF network element may further send, to the RAN, the routing information allocated by the UPF network element in step S392, and receive routing information that is allocated by the RAN and that is returned by the RAN.

Optionally, when the AMF subsequently requests a session management service of the first SMF network element, the method may further include S396: The AMF network element sends a session management context update request (Nsmf_PDUSession_UpdateSMContext Request) to the SCP, where a version included in a URI in the request message is the version of the first service-based interface sent in S380, and the SCP forwards the request message to the first SMF network element.

S397: The first SMF network element sends an N4 session update request to the UPF network element, where the request message includes the routing information allocated by the RAN.

S398: The UPF network element returns an N4 session update response.

S399: The first SMF network element returns a session management context update response (Nsmf_PDUSession_UpdateSMContext Response) to the SCP network element, and the SCP forwards the response message to the AMF network element.

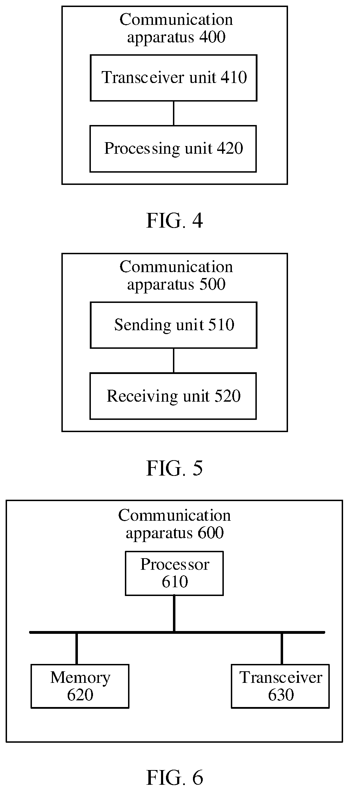

The foregoing describes in detail the communication method provided in embodiments of this application with reference to FIG. 2 and FIG. 3. The following describes apparatuses provided in embodiments of this application with reference to FIG. 4 to FIG. 6. It should be understood that descriptions of apparatus embodiments correspond to the descriptions of the method embodiments. Therefore, for content that is not described in detail, refer to the foregoing method embodiments. For brevity, details are not described herein again.

FIG. 4 is a schematic block diagram of a communication apparatus 400 according to an embodiment of this application. As shown in the figure, the apparatus 400 may include a transceiver unit 410 and a processing unit 420.

In a possible design, the communication apparatus 400 may correspond to the service communication proxy in the method 200 and the method 300 according to embodiments of this application. The communication apparatus 400 may include units configured to perform the method performed by the service communication proxy in the method 200 in FIG. 2 and the method 300 in FIG. 3. In addition, the units in the communication apparatus 400 and the foregoing other operations and/or functions are separately intended to implement corresponding procedures of the method 200 in FIG. 2 and the method 300 in FIG. 3.

When the communication apparatus 400 is configured to perform the method 200 in FIG. 2, the transceiver unit 410 may be configured to perform S210 to S230, S250, S270, and S280 in the method 200. The processing unit 420 may be configured to perform S240, S260, and S290. When the communication apparatus 400 is configured to perform the method 300 in FIG. 3, the transceiver unit 410 may be configured to perform S310 to S330 and S350 to S380 in the method 300. The processing unit 420 may be configured to perform S340 and S360. It should be understood that a specific process in which the units perform the foregoing corresponding steps is described in detail in the foregoing method embodiments. For brevity, details are not described herein.

FIG. 5 is a schematic block diagram of a communication apparatus according to an embodiment of this application. As shown in FIG. 5, an apparatus 500 includes a sending unit 510 and a receiving unit 520.

In a possible design, the communication apparatus 500 may correspond to the service invoking network element in the method 200 and the method 300 according to embodiments of this application. The communication apparatus 500 may include units configured to perform the method performed by the service providing network element in the method 200 in FIG. 2 and the method 300 in FIG. 3. In addition, the units in the communication apparatus 500 and the foregoing other operations and/or functions are separately intended to implement corresponding procedures of the method 200 in FIG. 2 and the method 300 in FIG. 3.

When the communication apparatus 500 is configured to perform the method 200 in FIG. 2, the sending unit 510 may be configured to perform S210 in the method 200, and the receiving unit 520 is configured to perform S280 in the method 200. When the communication apparatus 500 is configured to perform the method 300 in FIG. 3, the sending unit 510 may be configured to perform S310, and S394 to S3 96 in the method 300, and the receiving unit 520 may be configured to perform S302, S380, S393, and S399 in the method 300. It should be understood that a specific process in which the units perform the foregoing corresponding steps is described in detail in the foregoing method embodiments. For brevity, details are not described herein.

FIG. 6 is a block diagram of a structure of a communication apparatus 600 according to an embodiment of this application. As shown in FIG. 6, the communication apparatus 600 includes a processor 610, a memory 620, and a transceiver 630. The processor 610 is coupled to the memory 620, and is configured to execute instructions stored in the memory 620, to control the transceiver 630 to send a signal and/or receive a signal.

It should be understood that the processor 610 and the memory 620 may be integrated into one processing apparatus. The processor 610 is configured to execute program code stored in the memory 620 to implement the foregoing functions. During specific implementation, the memory 620 may alternatively be integrated into the processor 610, or may be independent of the processor 610. It should be understood that the processor 610 may alternatively correspond to each processing unit in the foregoing communication apparatus, and the transceiver 630 may correspond to each receiving unit and each sending unit in the foregoing communication apparatus.

It should be further understood that the transceiver 630 may include a receiver (or referred to as a receive machine) and a transmitter (or referred to as a transmit machine). The transceiver may further include an antenna. There may be one or more antennas. Alternatively, the transceiver may be a communication interface or an interface circuit. The communication apparatus 600 may correspond to the service communication proxy or the service providing network element in the method 200 and the method 300 according to embodiments of this application. It should be understood that a specific process in which the units perform the foregoing corresponding steps is described in detail in the foregoing method embodiments. For brevity, details are not described herein.

When the communication apparatus 600 is a chip, the chip includes a transceiver unit and a processing unit. The transceiver unit may be an input/output circuit or a communication interface. The processing unit may be a processor, a microprocessor, or an integrated circuit that is integrated on the chip.

In an implementation process, steps in the foregoing methods can be implemented by using a hardware integrated logical circuit in the processor, or by using instructions in a form of software. The steps of the method disclosed with reference to embodiments of this application may be directly executed and accomplished by using a hardware processor, or may be executed and accomplished by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly executed and accomplished by using a hardware decoding processor, or may be executed and accomplished by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product stores computer program code. When the computer program code is run on a computer, the computer is enabled to perform the method according to any one of embodiments of the method 200 and the method 300.

According to the method provided in embodiments of this application, this application further provides a computer-readable medium. The computer-readable medium stores program code. When the program code is run on a computer, the computer is enabled to perform the method according to any one of embodiments of the method 200 and the method 300.

According to the method provided in embodiments of this application, this application further provides a system. The system includes the foregoing apparatus or device.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application running on a computing device and the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a service communication proxy, a service request message sent by a service invoking network element, wherein the service request message is used to request to invoke a first service, the service request message indicates version information of a first service-based interface supported by the service invoking network element, and the first service-based interface is an interface corresponding to the first service; and
selecting, by the service communication proxy, a first service providing network element based on the service request message, wherein the first service providing network element and the service invoking network element support a same version of the first service-based interface.

2. The method according to claim 1, wherein before the selecting, by the service communication proxy, a first service providing network element based on the service request message, the method further comprises:
obtaining registration information of a service providing network element from a network repository function network element, wherein the service providing network element is configured to provide the first service, the registration information comprises a version list of the first service-based interface supported by one or more service providing network elements, and the version list comprises one or more versions.

3. The method according to claim 2, wherein the service request message comprises a version of the first service-based interface that is preferentially selected by the service invoking network element, and the selecting, by the service communication proxy, a first service providing network element based on the service request message comprises:
determining, by the service communication proxy based on the registration information, that a service providing network element that is in the one or more service providing network elements and that supports the version of the first service-based interface that is preferentially selected by the service invoking network element is the first service providing network element.

4. The method according to claim 3, wherein the service request message further comprises the version list of the first service-based interface supported by the service invoking network element, the version list comprises one or more versions, and the selecting, by the service communication proxy, a first service providing network element based on the service request message comprises:
determining, by the service communication proxy, that the service providing network element that supports the version of the first service-based interface that is preferentially selected by the service invoking network element does not exist in the one or more service providing network elements; and
determining, by the service communication proxy, the first service providing network element according to a local configuration rule, wherein the first service providing network element supports at least one version in the version list.

5. The method according to claim 2, wherein the service request message comprises the version list of the first service-based interface supported by the service invoking network element, the version list comprises one or more versions, and the determining, by the service communication proxy, a first service providing network element based on the service request message comprises:
if the version list of the first service-based interface supported by the service invoking network element comprises one version, determining, by the service communication proxy, that a service providing network element that is in the one or more service providing network elements and that supports the one version is the first service providing network element; or
if the version list of the first service-based interface supported by the service invoking network element comprises a plurality of versions, determining, by the service communication proxy, the first service providing network element according to a local configuration rule, wherein the first service providing network element supports at least one of the plurality of versions.

6. The method according to any one of claims 2 to 5, wherein the version list is carried in a user-defined hypertext transfer protocol HTTP header of the service request message, and the version preferentially selected by the service invoking network element is carried in a uniform resource identifier URI of the service request message.

7. The method according to claim 2, wherein the selecting, by the service communication proxy, a first service providing network element based on the service request message comprises:
if the URI of the service request message comprises a first version, and the first version indicates a version of the first service-based interface supported by the service invoking network element, determining, by the service communication proxy, that a service providing network element that is in the one or more service providing network elements and that supports the first version is the first service providing network element; or
if the URI of the service request message does not comprise version information, and the URI of the service request message indicates that the service invoking network element supports all versions of the first service-based interface, determining, by the service communication proxy, the first service providing network element according to a local configuration rule.

8. The method according to any one of claims 3 to 7, wherein the local configuration rule comprises at least one of the following rules:
preferentially selecting a network element that support a higher version or a lower version, preferentially selecting a network element with a higher priority, and preferentially selecting a lower-load network element.

9. The method according to any one of claims 1 to 8, wherein after the selecting, by the service communication proxy, a first service providing network element based on the service request message, the method further comprises:
determining, by the service communication proxy, that a version of the first service-based interface comprised in the URI of the service request message is inconsistent with a version of the first service-based interface selected by the service communication proxy; and
changing, by the service communication proxy, the version of the first service-based interface comprised in the URI of the service request message to the version of the first service-based interface selected by the service communication proxy.

10. The method according to any one of claims 1 to 9, wherein the method further comprises:
receiving, by the service communication proxy, a service response message sent by the first service providing network element; and
sending, by the service communication proxy, the service response message to the service invoking network element, wherein the service response message comprises the version of the first service-based interface selected by the service communication proxy.

11. A communication method, comprising:
sending, by a service invoking network element, a service request message to a service communication proxy, wherein the service request message is used to request to invoke a first service, the service request message indicates version information of a first service-based interface supported by the service invoking network element, and the first service-based interface is an interface corresponding to the first service.

12. The method according to claim 11, wherein the service request message comprises a version of the first service-based interface that is preferentially selected by the service invoking network element, and the version of the first service-based interface that is preferentially selected by the service invoking network element is used by the service communication proxy to select a first service providing network element.

13. The method according to claim 12, wherein the service request message further comprises a version list of the first service-based interface supported by the service invoking network element, the version list comprises one or more versions, the version list is used by the service communication proxy to select the first service providing network element, and the first service providing network element supports at least one version in the version list.

14. The method according to claim 11, wherein the service request message comprises a version list of the first service-based interface supported by the service invoking network element, the version list comprises one or more versions, the version list is used by the service communication proxy to select a first service providing network element, and the first service providing network element supports one or more versions in the version list.

15. The method according to claim 13 or 14, wherein the version list is carried in a user-defined hypertext transfer protocol HTTP header of the service request message, and the version preferentially selected by the service invoking network element is carried in a uniform resource identifier URI of the service request message.

16. The method according to claim 11, wherein the URI of the service request message comprises a first version, and the first version indicates a version of the first service-based interface supported by the service invoking network element; or the URI of the service request message does not comprise version information, and indicates that the service invoking network element supports all versions of the first service-based interface.

17. The method according to any one of claims 11 to 16, wherein after the sending, by a service invoking network element, a service request message to a service communication proxy, the method further comprises:
receiving, by the service invoking network element, a service response message sent by the service communication proxy, wherein the service response message is from the first service providing network element, the first service providing network element is determined by the service communication proxy based on the service request message, and the first service providing network element and the service invoking network element support a same version of the first service-based interface.

18. The method according to any one of claims 11 to 17, wherein the service response message comprises a version of the first service-based interface selected by the service communication proxy.

19. A communication apparatus, comprising:
a processor, wherein the processor is coupled to a memory, the memory is configured to store a program or instructions, and when the program or the instructions are executed by the processor, the apparatus is enabled to perform the method according to any one of claims 1 to 10; or the apparatus is enabled to perform the method according to any one of claims 11 to 18.

20. A service communication proxy, comprising:
a processor and a memory, wherein
the memory is configured to store a program or instructions, and when the program or the instructions are executed by the processor, the service discovery function network element is enabled to perform the method according to any one of claims 1 to 10.

21. A core network element, comprising:
a processor and a memory, wherein
the memory is configured to store computer-executable instructions, and when the program or the instructions are executed by the processor, the core network element is enabled to perform the method according to any one of claims 11 to 18.

22. A chip system, comprising:
a memory, configured to store a computer program; and
a processor, configured to invoke and run the computer program from the memory, to enable a device installed with the chip system perform the method according to any one of claims 1 to 10 or any one of claims 11 to 18.

23. A computer-readable storage medium, wherein the computer-readable storage medium comprises a computer program, and when the computer program is run on a computer, the computer is enabled to perform the method according to any one of claims 1 to 10 or any one of claims 11 to 18.
